# EUROPÄISCHE PATENTANMELDUNG

(11) **EP 1 066 944 A2**
(43) Veröffentlichungstag der Anmeldung: **10.01.2001**
(21) Anmeldenummer: 00113840.3
(22) Anmeldetag: 30.06.2000
(51) Int. Cl.: B29C 44/46

(54) **Auftragsvorrichtung für flüssigen, schäumbaren Kunststoffgemisches**

(30) Priorität: 08.07.1999 DE 19931752
(71) Anmelder: Thyssen Krupp Stahl AG, 40211 Düsseldorf (DE)
(72) Erfinder: Buch, Hans-Jürgen, 57223 Kreuztal (DE); Clemens, Heinz-Willi, 57482 Wenden (DE); Reuter, Manfred, Dipl.-Ing., 04416 Gaschwitz (DE); Sydow, Jochen, Dipl.-Ing., 58540 Meinerzhagen (DE)

(57) **Zusammenfassung**

Die Gießharke (29) zum Auftragen eines flüssigen, schäumbaren Kunststoffgemisches auf die Innenseite eines unteren Profilblechbandes in einer Anlage zur Fertigung von Sandwich-Bauelementen mit einem Kunststoff-Hartschaumkern sowie einer unteren und einer oberen Deckschale aus Stahlblech ist dadurch gekennzeichnet, daß zur Erzielung eines ansteigenden Geschwindigkeitsverlaufes des durch die Längsbohrung (31) der Gießharke (29) fließenden Kunststoffgemischstromes sich der Bohrungsquerschnitt (36) von der Eintrittsöffnung (37) bis zum Ende (32) der Längsbohrung (31) kontinuierlich verringert. Durch die stetig ansteigende Durchflußgeschwindigkeit des durch die Längsbohrung (31) der Gießharke (29) fließenden Kunststoffgemischstromes wird erreicht, daß durch alle über die Länge (34) der Längsbohrung (31) angeordneten Verteilerbohrungen (35) kontinuierliche Ströme eines schäumbaren Kunststoffgemisches austreten.

## Beschreibung

Die Erfindung betrifft Gießharken zum Auftragen eines flüssigen, schäumbaren Kunststoffgemisches auf die Oberflächen von Metallteilen, insbesondere zum Auftragen des Kunststoffgemisches auf die Innenseite eines unteren Profilblechbandes in einer Anlage zur Fertigung von Sandwich-Bauelementen mit einem Kunststoff-Hartschaumkern sowie einer unteren und einer oberen Deckschale aus Stahlblech zum Erstellen von Dächern, Wänden und Toren, wobei die in Fertigungsrichtung ausgerichtete Gießharke eine Längsbohrung sowie von dieser abzweigende, quergerichtete Verteilerbohrungen aufweist und mit einem Mischkopf zum Vermischen der getrennt zugeführten Kunststoffkomponenten sowie einem Antrieb zur Ausführung einer oszillierenden Hubbewegung quer zur Fertigungsrichtung ausgerüstet und vor einer Doppelformstrecke angeordnet ist, die durch ein unteres und ein oberes endloses, angetriebenes Plattenband, zwei Seitendichtketten sowie auf dem unteren Plattenband aufliegende und mit diesem umlaufende, endlose Stützketten gebildet wird, die das untere Profilblechband von zwei mit Profilwalzmaschinen hergestellten, mit Abstand parallel übereinander in die Doppelformstrecke einlaufenden Profilblechenbändern gegen den Schäumdruck des Kunststoffs abstützen, der den Raum zwischen unterem und oberem Profilblechband in einer Reaktionszone der Doppelformstrecke ausschäumt, und wobei der Doppelformstrecke eine Trennvorrichtung zum Ablängen der Dach-, Wand- oder Torelemente von dem aus der Doppelformstrecke austretenden Sandwich-Profilblechstrang nachgeordnet ist.

Derartige, aus der DE 42 02 736 A1 bekannte Gießharken, die in aus der DE 197 44 049 C1 sowie der DE 196 37 673 C1 bekannten Anlagen zur Herstellung von Sandwichelementen zum Einsatz kommen, haben den Nachteil, daß sich die Verteilerbohrungen insbesondere im Bereich des Harkenendes während des Betriebs mit der Zeit zusetzen, so daß ein gleichmäßiger Auftrag des flüssigen Kunststoffgemisches auf die Metalloberfläche nicht mehr gewährleistet ist und es dadurch zu Produktionsfehlern wie einer Lunkerbildung im Hartschaumkern von Sandwichelementen kommt und dadurch die vorgeschriebenen Anforderungen hinsichtlich der Festigkeit und der Wärmedämmung der Sandwichelemente nicht erfüllt werden und die erforderliche Maßhaltigkeit der Sandwichelemente nicht gewährleistet ist.

Das Zusetzen der Verteilerbohrungen der Gießharke beruht auf verschiedenen Ursachen.

Infolge des fortlaufenden Austretens des flüssigen Kunststoffgemisches durch die von der Längsbohrung der Gießharke abzweigenden, parallelen Verteilerbohrungen nimmt die Menge des Kunststoffgemisches, das je Zeiteinheit durch die einen konstanten Strömungsquerschnitt aufweisende Längsbohrung mit einer annähernd konstanten bzw. zum Ende der Längsbohrung leicht abnehmenden Strömungsgeschwindigkeit fließt, zum Ende der Längsbohrung ab. Dies kann dazu führen, daß das flüssige Kunststoffgemisch aus den Verteilerbohrungen im Endabschnitt der Längsbohrung beim Einsatz einer neuen oder gereinigten Gießharke in der Fertigung nicht in kontinuierlichen Strahlen austritt sondern aus den Verteilerbohrungen herausplätschert bzw. heraustropft.

Durch die scharfkantigen Übergänge zwischen der Längsbohrung und den Verteilerbohrungen werden Verwirbelungen sowohl in der Hauptströmung des Kunststoffgemisches durch die Längsbohrung der Gießharke als auch in den Teilströmen des Kunststoffgemisches durch die Verteilerbohrungen ausgelöst. Durch diese Verwirbelungen wird die Strömungsgeschwindigkeit des Kunststoffgemisches in der Längsbohrung und den Verteilerbohrungen der Gießharke vermindert. Diese Herabsetzung der Strömungsgeschwindigkeit muß bei der Berechnung der erforderlichen Bohrungsquerschnitte durch das Ansetzen der Ausflußzahl berücksichtigt werden.

Die Gießharken, die aus Metall hergestellt sind, müssen regelmäßig von den im Betrieb auftretenden Verstopfungen der Verteilerbohrungen mit Kunststoff und Kunststoffablagerungen an der Bohrungswand der Längsbohrung gereinigt werden. Zur Reinigung der Längsbohrung verwendet man Drahtbürsten. Die Verteilerbohrungen werden mittels Bohrmaschinen gereinigt. Diese Art der Reinigung führt zu einer Aufrauhung der metallischen Bohrungswände. Beim Durchströmen des viskosen Kunststoffgemisches durch die Längsbohrung und die Verteilerbohrungen der Gießharke tritt zwischen den aufgerauhten Bohrungswänden und dem Kunststoffstrom Reibung auf, die zu einer Erwärmung des flüssigen Kunststoffgemisches führt.

Aufgrund der annähernd konstanten Strömungsgeschwindigkeit der über die Länge der Längsbohrung der Gießharke abnehmenden Kunststoffgemischströmung verringert sich die Menge des aus den Verteilerbohrungen im Endbereich der Längsbohrung austretenden Kunststoffs, und die Verweilzeit des Kunststoffs in diesen hinteren Verteilerbohrungen erhöht sich.

Die längere Verweilzeit des flüssigen Kunststoffgemischs in den hinteren Verteilerbohrungen gegenüber dem Kunststoffgemisch in den vorderen und mittleren Verteilerbohrungen der Gießharke sowie die Erwärmung des viskosen Kunststoffgemisches durch die Zuführung von Reibungswärme lösen den vorzeitigen Schäumvorgang des Kunststoffgemisches vornehmlich in den - in Strömungsrichtung des Kunststoffgemisches durch die Längsbohrung der Gießharke gesehen - hinteren Verteilerbohrungen der Gießharke durch das vorzeitige Ingangsetzen einer entsprechenden chemischen Reaktion aus, so daß diese Verteilerbohrungen während des laufenden Betriebes verstopfen.

Die Herstellung der Gießharke aus Metall bedingt ein entsprechendes Gewicht, das der Produktionsgeschwindigkeit in einer Anlage zur kontinuierlichen Fertigung von Sandwichelementen Grenzen setzt, da der Antrieb für die oszillierende Hubbewegung einer Gießharke mit einer Länge von ungefähr dreihundert Millimetern mit sechzig bis achtzig Doppelhüben pro Minute an der oberen Leistungsgrenze liegt.

Schließlich ist der Herstellungspreis von Gießharken aus Metall mit einer Standzeit von ungefähr einem Monat sehr hoch.

Der Erfindung liegt die Aufgabe zugrunde, die gattungsgemäße Gießharke im Hinblick auf eine optimale Betriebsweise und eine preiswerte Herstellung weiterzuentwickeln.

Diese Aufgabe ich erfindungsgemäß gelöst durch eine Gießharke mit den Merkmalen des Patentanspruchs 1.

Die Unteransprüche beinhalten vorteilhafte und zweckmäßige Weiterbildungen der Erfindung.

Der Erfindungsgedanke besteht darin, bei einer gattungsgemäßen Gießharke durch eine kontinuierliche Verringerung des Bohrungsquerschnitts von der Eintrittsöffnung bis zum Ende der Längsbohrung der Gießharke die Durchflußgeschwindigkeit des Kunststoffgemischstromes in der Längsbohrung kontinuierlich zu erhöhen und damit zu erreichen, daß durch alle über die Länge der Längsbohrung der Gießharke angeordnete Verteilerbohrungen kontinuierliche Ströme eines schäumbaren Kunststoffgemischs austreten, und durch eine Anfasung des an die Längsbohrung angrenzenden Abschnitts der Verteilerbohrungen eine Wirbelbildung in den Kunststoffgemischströmen in der Längsbohrung und den Verteilerbohrungen im Hinblick auf das Auslösen eines vorzeitigen Schäumvorganges des Kunststoffgemischs in der Gießharke zu vermeiden.

Die DE 27 03 680 B2 beschreibt einen Gießbalken zum Auftragen eines flüssigen, schäumbaren Kunststoff-Reaktionsgemisches auf ein umlaufendes Transportband zur Herstellung von Erzeugnissen aus geschäumtem Kunststoff. Der quer zu dem umlaufenden Transportband angeordnete Gießbalken, der über zwei Vorratsbehälter und eine zentrale Zuleitung gespeist wird, besteht aus einem inneren und einem äußeren Rohr, die mit Abstand konzentrisch angeordnet sind und eine zylindrische Innenkammer sowie eine äußere Ringkammer bilden. Von der zentralen Zuleitung zweigen zwei Zuführungsleitungen ab, die an die vom inneren Rohr gebildete Innenkammer des Gießbalkens angeschlossen sind. In die Innenkammer sind vom Eintritt der Zuführungsleitungen ansteigende keilförmige Einsätze eingebaut, die den lichten Querschnitt der Innenkammer mit zunehmender Entfernung vom Eintritt der Zuführungsleitungen verringern. An der höchsten Stelle des inneren Rohres sind Oberlauföffnungen zur äußeren Ringkammer des Gießbalkens vorgesehen, deren Querschnitt mit zunehmendem Abstand vom Eintritt der Zuführungsleitungen zunimmt. Aufgrund der Erhöhung der Durchflußgeschwindigkeit der Kunststoffgemischströme vom Eintritt derselben in die Innenkammer über deren Länge fließt das Kunststoffgemisch gleichmäßig durch die Überlauföffnungen aus der Innenkammer in die äußere Ringkammer und tritt von dort durch über die gesamte Länge des Gießbalkens verteilte Auslaßöffnungen an der tiefsten Stelle im äußeren Rohr auf das umlaufende Transportband aus. Durch die gleichmäßige Verteilung der Kunststoff-Reaktionsmasse über die gesamte Länge des Gießbalkens wird ein Schaumstoff einheitlicher Konsistenz und Qualität hergestellt.

Eine Anregung, den bekannten Gießbalken wie bei der erfindungsgemäßen Gießharke mit Verteilerbohrungen zu versehen und durch eine Anfasung der an die äußere Ringkammer des Gießbalkens angrenzenden Abschnitte der Verteilerbohrungen eine Wirbelbildung in den Kunststoffgemischströmen im Hinblick auf das Auslösen eines vorzeitigen Schäumvorgangs des Kunststoffgemisches in dem Gießbalken zu vermeiden, ist der DE 27 03 680 B2 nicht zu entnehmen.

Die Erfindung ist nachstehend anhand von Zeichnungsfiguren erläutert, die im einzelnen folgendes darstellen:
- Fig. 1: eine Anlage zur Herstellung von Sandwich-Bauelementen,
- Fig. 2: eine schematische Seitenansicht einer Gießharke, die einer Doppelformstrecke vorgeordnet ist,
- Fig. 3: eine schematische Draufsicht der Gießharke und der Doppelformstrecke nach Fig. 2,
- Fig. 4: einen Längsschnitt einer Gießharke in vergrößerter Darstellung, die
- Fign. 5a-5e: Querschnittsdarstellungen der Gießharke nach den Linien Va-Va bis Ve-Ve der Fig. 4 und
- Fig. 6: eine vergrößerte Darstellung einer Verteilerbohrung der Gießharke gemäß Ausschnitt VI der Fig. 4

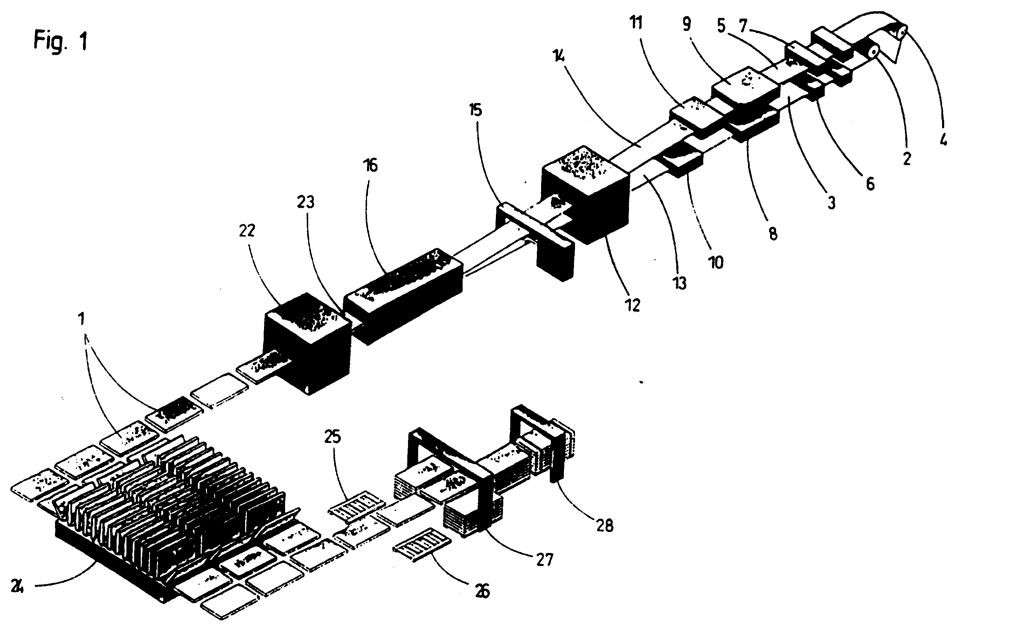

Die Hauptteile der Anlage nach Fig. 1 zur Herstellung von Sandwich-Bauelementen 1 zum Erstellen von wärmedämmenden und belastbaren Dächern und Wänden sowie von Toren sind ein Abwickelhaspel 2 für ein unteres Blechband 3 und ein Abwickelhaspel 4 für ein .oberes Blechband 5, Verbindungsstationen 6, 7 zur Befestigung des Bandanfangs der auf die Dorne der beiden Abwickelhaspeln 2, 4 aufgeschobenen Coils am Ende des durch die Anlage laufenden unteren 3 und oberen Blechbandes 5, Profilwalzmaschinen 8-11 zur Profilierung der Ränder und der Flächen des unteren 3 und des oberen Blechbandes 5, eine Vorwärmstation 12 zum Erwärmen der beiden profilierten Blechbänder 13, 14, ein Schäumportal 15 zum Aufbringen eines schäumfähigen Kunststoffgemisches auf die Oberseite des unteren Profilblechbandes 13, eine Doppelformstrecke 16 mit einem unteren und einem oberen, endlosen, angetriebenen Plattenband 17, 18, zwei Seitendichtketten 19, 20 sowie mit dem unteren Plattenband 17 umlaufenden endlosen Stützketten 21, wobei die Plattenbänder 17, 18 zusammen mit den Stützketten 21 die mit Abstand parallel übereinander durch die Doppelformstrecke 16 laufenden beiden Profilblechbander 13, 14 gegen den Schäumdruck des in einer Reaktionszone der Doppelformstrecke 16 aufschäumenden Kunststoffs abstützen, eine fliegende Säge 22 zum Abtrennen der Sandwich-Bauelemente 1 mit einer gewünschten Länge von dem aus der Doppelformstrecke 16 austretenden Sandwich-Profilblechstrang 23, eine Kühlstrecke 24 zum Abkühlen der in der Reaktionszone der Doppelformstrecke 16 erwärmten Sandwich-Bauelemente 1, eine Vorrichtung 25 zum Zuführen von Paletten 26, eine Anlage 27 zum Stapeln der abgekühlten Sandwich-Bauelemente 1 auf den Paletten 26 sowie ein Automat 28 zum Umreifen der auf den Paletten 26 gestapelten Sandwich-Bauelemente 1.

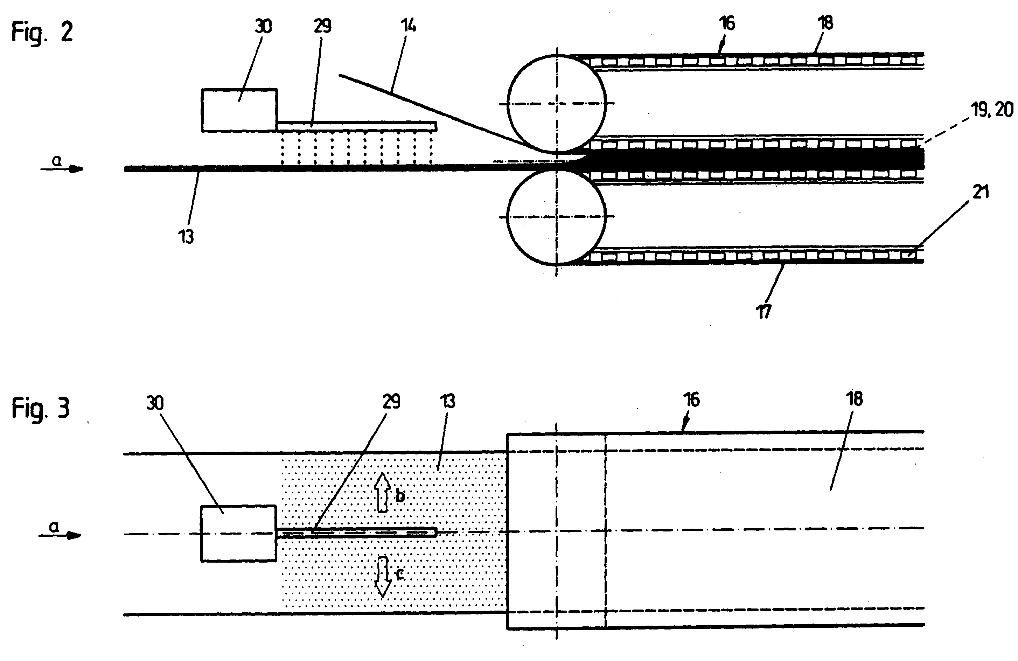

Die in das Schäumportal 15 eingebaute Gießharke 29 nach den Fign. 2 - 6 zum Auftragen eines schäumfähigen Kunststoffgemischs auf die Oberseite eines unteren Profilblechbandes 13 ist mit einem Mischkopf 30 ausgestattet, in dem die verschiedenen Komponenten des aufzutragenden Kunststoffgemisches miteinander vermischt werden. Ein nicht dargestellter Antrieb versetzt die Gießharke 29 in eine oszillierende Hubbewegung in Pfeilrichtung b, c quer zur Fertigungsrichtung a.

Das Kunststoffgemisch fließt aus dem Mischkopf 30 in eine an ihrem Ende 32 durch einen Schraubstopfen 33 verschlossene Längsbohrung 31 der Gießharke 29, von der Über die ganze Bohrungslänge 34 mit gleichem Abstand angeordnete, quergerichtete Verteilerbohrungen 35 abzweigen, durch die das Kunststoffgemisch austritt und durch die oszillierende Bewegung der Gießharke 29 gleichmäßig auf die Oberseite des Profilblechbandes 13 verteilt wird.

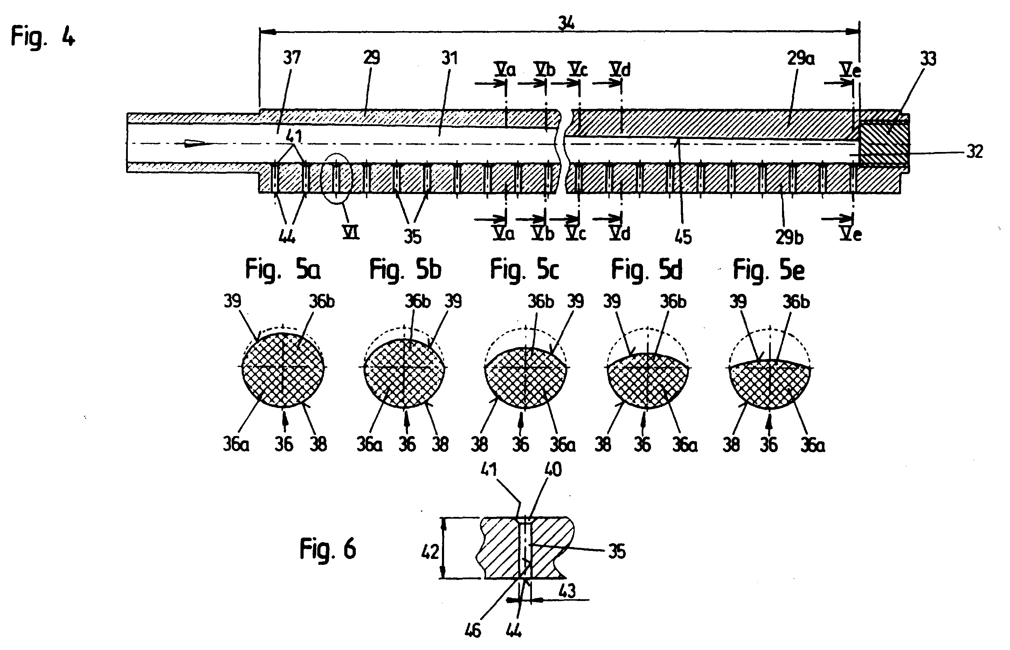

Gemäß den Fign. 5a- 5e verringert sich der Bohrungsquerschnitt 36 der Längsbohrung 31 der Gießharke 29 kontinuierlich von der Eintrittsöffnung 37 bis zum Bohrungsende 32, wobei die an die Verteilerbohrungen 35 angrenzende untere Querschnittshälfte 36a der Längsbohrung 31 über die gesamte Bohrungslänge 34 eine gleichbleibende Halbkreisform 38 aufweist und die obere Querschnittshälfte 36b der Längsbohrung 31 eine Ellipsenform 39 besitzt, die vom Bereich der Eintrittsöffnung 37 bis zum Ende 32 der Längsbohrung 31 kontinuierlich abflacht.

Durch diese geometrische Formgebung der Längsbohrung 31 der Gießharke 29 wird erreicht, daß die Durchflußgeschwindigkeit des Kunststoffgemischstromes in der Längsbohrung kontinuierlich gesteigert und damit bewirkt wird, daß durch alle über die Länge der Längsbohrung der Gießharke angeordnete Verteilerbohrungen kontinuierliche Ströme eines schäumbaren Kunststoffgemisches austreten.

Abweichend von den Darstellungen in den Fign. 5a - 5e sind andere geometrische Querschnittsformen der Längsbohrung 31 der Gießharke 29 denkbar.

Um Wirbelbildungen, die die Durchflußgeschwindigkeit der Kunststoffgemischströme durch die Längsbohrung 31 und die Verteilerbohrungen 35 herabsetzen und eine die Schäumreaktion beschleunigende Erwärmung der Kunststoffgemischströme bewirken, zu vermeiden, weist der an die Längsbohrung 31 angrenzende Abschnitt 40 der Verteilerbohrungen 35 der Gießharke 29 eine Anfasung 41 auf.

Durch eine entsprechende Bemessung der Bohrungstiefe 42 der Verteilerbohrungen 35 können diese als Beruhigungsstrecken für die durchfließenden Kunststoffgemischströme ausgebildet werden, so daß in Verbindung mit der Anfasung 41 der Verteilerbohrungen 35 eine weitgehendst laminare Strömung der Kunststoffgemischströme in der Längsbohrung 31 und den Verteilerbohrungen 35 der Gießharke 29 erreicht werden kann.

Die Verteilerbohrungen 35 einer Gießharke 29 weisen den gleichen Durchmesser 43 auf, und die Austrittsöffnung 44 der Verteilerbohrungen 35 ist scharfkantig ausgebildet.

Die Gießharke 29 ist aus Kunststoff hergestellt. Kunststoff als Herstellungsmaterial hat den Vorteil, daß die Längsbohrung 31 und die Verteilerbohrungen 35 glatte Innenflächen 45, 46 aufweisen, so daß die zu einer Erwärmung des flüssigen Kunststoffgemisches führende Flüssigkeitsreibung zwischen den Kunststoffgemischströmen und den Bohrungsinnenflächen 45, 46 im Vergleich zu Stahl als Herstellungsmaterial niedriger ist.

Die Gießharke 29 ist aus zwei aus Kunststoff spritzgegossenen Hälften 29a, 29b zusammengeschweißt oder geklebt, wobei als Schweißverfahren eine Ultraschallschweißung bevorzugt eingesetzt wird.

Kunststoff als Herstellungswerkstoff ermöglicht gegenüber Stahl eine Gewichtsverminderung der Gießharke. Dies bedeutet, daß die Harkenlänge und damit die Anzahl der Austrittsbohrungen gegenüber den Stahlharken vergrößert werden kann. Die größere Anzahl der Verteilerbohrungen ermöglicht gegenüber den Stahlharken einen größeren Auftrag an schäumbarem Kunststoffgemisch je Zeiteinheit auf ein Profilblechband, so daß die Produktionsleistung von Anlagen zur Herstellung von Sandwich-Bauelementen gesteigert werden kann.

Kunststoff als Herstellungswerkstoff ermöglicht eine preisgünstige Fertigung der für die Herstellung der verschiedenen Sandwich-Bauelementtypen mit unterschiedlichen Abmessungen erforderlichen Gießharken mit entsprechend den benötigten Mengen an schäumbarem Kunststoffgemisch unterschiedlichen Bohrungsdurchmessern der Längsbohrung und der Verteilerbohrungen sowie einer unterschiedlichen, die Harkenlänge bestimmenden Anzahl von Verteilerbohrungen.

### Bezugszeichen

- 1: Sandwich-Bauelement
- 2: Abwickelhaspel für 3
- 3: unteres Blechband
- 4: Abwickelhaspel für 5
- 5: oberes Blechband
- 6: Verbindungsstation
- 7: Verbindungsstation
- 8: Profilwalzmaschine
- 9: Profilwalzmaschine
- 10: Profilwalzmaschine
- 11: Profilwalzmaschine
- 12: Vorwärmstation
- 13: unteres profiliertes Blechband
- 14: oberes profiliertes Blechband
- 15: Schäumportal
- 16: Doppelformstrecke
- 17: unteres Plattenband von 16
- 18: oberes Plattenband von 16
- 19: Seitertdichtkette von 16
- 20: Seitendichtkette von 16
- 21: Stützkette auf 17
- 22: Säge
- 23: Sandwich-Profilblechstrang
- 24: Kühlstrecke für 1
- 25: Vorrichtung zum Zuführen von 26
- 26: Palette
- 27: Stapelanlage für 1 auf 26
- 28: Umreifungsautomat
- 29: Gießharke
- 29a: Hälfte von 29
- 29b: Hälfte von 29
- 30: Mischkopf
- 31: Längsbohrung von 29
- 32: Ende von 31
- 33: Schraubstopfen
- 34: Länge von 31
- 35: Verteilerbohrung von 31
- 36: Bohrungsquerschnitt von 31
- 36a: untere Querschnittshälfte von 36
- 36b: obere Querschnittshälfte von 36
- 37: Eintrittsöffnung von 31
- 38: Halbkreisform von 36a
- 39: Ellipsenform von 36b
- 40: an 31 angrenzender Abschnitt von 35
- 41: Anfasung von 40
- 42: Bohrungstiefe von 35
- 43: Durchmesser von 35
- 44: Austrittsöffnung von 35
- 45: Innenfläche von 31
- 46: Innenfläche von 35
- a: Fertigungsrichtung
- b, c: Richtung der oszillierenden Bewegung von 29

## Patentansprüche

1. Gießharke zum Auftragen eines flüssigen, schäumbaren Kunststoffgemisches auf die Oberflächen von Metallteilen, insbesondere zum Auftragen des Kunststoffgemisches auf die Innenseite eines unteren Profilblechbandes in einer Anlage zur Fertigung von Sandwich-Bauelementen mit einem Kunststoff-Hartschaumkern sowie einer unteren und einer oberen Deckschale aus Stahlblech zum Erstellen von Dächern, Wänden und Toren, wobei die in Fertigungsrichtung ausgerichtete Gießharke eine Längsbohrung sowie von dieser abzweigende, quergerichtete Verteilerbohrungen aufweist und mit einem Mischkopf zum Vermischen der getrennt zugeführten Kunststoffkomponenten sowie einem Antrieb zur Ausführung einer oszillierenden Hubbewegung quer zur Fertigungsrichtung ausgerüstet und vor einer Doppelformstrecke angeordnet ist, die durch ein unteres und ein oberes endloses, angetriebenes Plattenband, zwei Seitendichtketten sowie auf dem unteren Plattenband aufliegende und mit diesem umlaufende, endlose Stützketten gebildet wird, die das untere Profilblechband von zwei mit Profilwalzmaschinen hergestellten, mit Abstand parallel übereinander in die Doppelformstrecke einlaufenden Profilblechbändern gegen den Schäumdruck des Kunststoffs abstützen, der den Raum zwischen unterem und oberem Profilblechband in einer Reaktionszone der Doppelformstrecke ausschäumt, und wobei der Doppelformstrecke eine Trennvorrichtung zum Ablängen der Dach-, Wand- oder Torelemente von dem aus der Doppelformstrecke austretenden Sandwich-Profilblechstrang nachgeordnet ist, dadurch gekennzeichnet, daß zur Erzielung eines ansteigenden Geschwindigkeitsverlaufes des durch die Längsbohrung (31) der Gießharke (29) fließenden Kunststoffgemischstromes sich der Bohrungsquerschnitt (36) von der Eintrittsöffnung (37) bis zum Ende (32) der Längsbohrung (31) kontinuierlich verringert und daß der an die Längsbohrung (31) angrenzende Abschnitt (40) der Verteilerbohrungen (35) der Gießharke (29) zur Vermeidung von Wirbelbildungen in den Kunststoffgemischströmen in der Längsbohrung (31) und den Verteilerbohrringen (35) eine Anfasung (41) aufweist.

2. Gießharke nach Anspruch 1, dadurch gekennzeichnet, daß die an die Verteilerbohrungen (35) angrenzende untere Querschnittshälfte (36a) der Längsbohrung (31) über die gesamte Bohrungslänge (34) eine gleichbleibende Halbkreisform (38) aufweist und daß die obere Querschnittshälfte (36b) der Längsbohrung (31) eine Ellipsenform (39) besitzt, die vom Bereich der Eintrittsöffnung (37) bis zum Ende (32) der Längsbohrung (31) kontinuierlich abflacht.

3. Gießharke nach Anspruch 1 und 2, gekennzeichnet durch eine Ausbildung der Verteilerbohrungen (35) als Beruhigungsstrecken für die durchfließenden Kunststoffgemischströme durch eine entsprechende Bemessung der Bohrungstiefe (42).

4. Gießharke nach einem der Ansprüche 1 bis 3, dadurch gekennzeichnet, daß die Verteilerbohrungen (35) den gleichen Durchmesser (43) aufweisen.

5. Gießharke nach einem der Ansprüche 1 bis 4, dadurch gekennzeichnet, daß die Austrittsöffnung (44) der Verteilerbohrungen (35) scharfkantig ausgebildet ist.

6. Gießharke nach einem der Ansprüche 1 bis 5, dadurch gekennzeichnet, daß diese (29) aus Kunststoff besteht und daß die Längsbohrung (31) und die Verteilerbohrungen (35) glatte Innenflächen (45, 46) aufweisen.

7. Gießharke nach Anspruch 6, dadurch gekennzeichnet, daß diese (29) aus zwei aus Kunststoff spritzgegossenen Hälften (29a, 29b) zusammengeschweißt oder geklebt ist.
